# EUROPEAN PATENT SPECIFICATION

(11) **EP 2 011 301 B1**
(45) Date of publication and mention of the grant of the patent: **22.06.2011**
(21) Application number: 06757837.7
(22) Date of filing: 13.07.2006
(51) Int. Cl.: H04L 29/06, H04L 12/22

(54) **ARRANGEMENT OF AND METHOD FOR SECURE DATA TRANSMISSION.**
ANORDNUNG UND VERFAHREN ZUR SICHEREN DATENÜBERTRAGUNG
SYSTÈME ET PROCÉDÉ DE TRANSMISSION DE DONNÉES PROTÉGÉES

(30) Priority: 10.04.2006 EP 06112432
(43) Date of publication of application: 07.01.2009
(73) Proprietor: Trust Integration Services B.V., 3542 DG Utrecht (NL)
(72) Inventor: SONNEGA, Marco, Alexander, Henk, 6741 ZH Lunteren (NL); KALENDA, Zdenek, 7396 PD De Vecht Terwolde (NL)
(74) Representative: Ketelaars, Maarten F.J.M.
(86) International application number: PCT/NL2006/050175
(87) International publication number: WO 2007/117131

(56) References cited:
- WO-A-98/09209
- WO-A1-02/23798
- WO-A2-02/07377
- WO-A2-02/07377

## Description

### Field of the invention

The invention relates to the field of protecting data communications in which secret keys are used to encrypt/decrypt data, and possibly digitally sign data, which data is transmitted along a communication path and needs to be secured.

### Technological background

Massachusetts Institute of Technology has developed a network authentication protocol that is known as "Kerberos". Kerberos is available as open source software, however also as a commercial software product. Kerberos uses a secret-key cryptography. A Kerberos server distributes "tickets" to communication units after these communication units have authorized themselves to the Kerberos server.

Another known way of secret communications is by using Virtual Smartcard Services (VSS). VSS is a substitute for a physical smartcard in a full scale PKI solution (PKI = Public Key Infrastructure).

WO 98/09209 discloses a system and a method for secure transaction management and electronic rights protection.

WO 02/23798 discloses a system for protecting objects stored on network servers. The servers are running software that designates which objects are to be protected as well as a security policy for that object. An object server creates an enhanced request containing encrypted data upon request for a protected object and redirects that to a security server which authenticates the request, retrieves and encrypts the requested object using a one-time encryption key.

WO 02/07377 discloses a system and method for secure electronic transactions between business partners in a limited access electronic network. That limited access electronic network is accessible only to authorized business partners. A Certification Authority (CA) is accessible over a public network and may issue a corporate digital certificate to a business partner after the business partner has been authorized by the CA. The digital certificate is to be used as an online credential for accessing the limited access electronic network.

### Summary of the invention

There is a need in the market to provide a high level of security in communications without having to wait for a full scale implementation of PKI which may take another 10 to 15 years when implemented by a central governmental organization.

To that end the invention provides some methods and arrangements as specified in the annexed claims.

The invention allows to exchange data in a secure way via, e.g., the Internet. The invention allows this by using digital certificates without the normal burden of issuing and managing digital certificates which makes other implementations in which private and public keys are used so expensive.

The invention is directed to a reliable way of authentication and, subsequently, securing a connection between two clients or between a client and a server using a centrally managed policy enforcer.

### Brief description of the drawings

The invention will now be explained with reference to some drawings which are only intended to illustrate the invention and not to limit the invention in any way. The scope of the invention is defined by the annexed claims and their technical equivalents.
Figure 1 shows a schematic overview of a network arrangement used in the present invention;
Figure 2 shows a schematic overview of a computer arrangement;
Figure 3 shows a schematic over of a network arrangement suitable for securely sending and receiving emails.

### Detailed description of embodiments

### 1. INTRODUCTION

An overwhelming majority of services provided through the Internet are web-based applications. These applications rely on secure and reliable communications. The Internet uses TCP-IP as its *lingua franca.* IP's strength lies in it's easily and flexible routed packages. These packages are also the main weakness. The way IP routes these packages makes IP networks vulnerable for security risks. This document discloses a solution to reduce such weakness.

### Rising demand for security

In the recent decades many traditional services have been transformed into digital and e-business services. Today millions of people order products and services on-line without any personal contact with their suppliers. Web shops, e-tickets, payments, track & trace, product configuration and many other services are completely digitised. As the amount of money involved in on-line business is growing, so is the interest of criminal organizations to use the Internet for their benefit. This situation calls for secure communication and/or strong authentication. In other words: whom are we talking to, and how do we make sure that nobody else is listening or manipulating the conversation.

### Solutions

Solutions to this problem do exist. The two techniques used for this purpose are signing and encryption. And here we see the basics of digital certificates that contain key pairs with a public key and a private key, which digital certificates are designed for both signing and encryption. Digital certificates serve their purpose very well *if and only if* used in the *correct* way. This implies correct administration, user discipline and no calamities. If this is not the case, one can start all over again. It also involves high investments in infrastructure and education. Not to mention the time, effort and costs of maintaining this so-called Public Key Infrastructure (PKI).

PKI is the future, but it is only feasible if it is implemented on a large centralised scale. Like the way we all have a passport or other means of identification, which can be trusted because it has been issued by the state. But these PKI solutions will not be implemented on a large centralised scale for another five to ten years. So, until that moment has arrived an alternative is needed. The present invention provides such an alternative in the form of using a security server in a network environment which provides digital certificates with a limited lifetime, as will be explained below.

### Security server

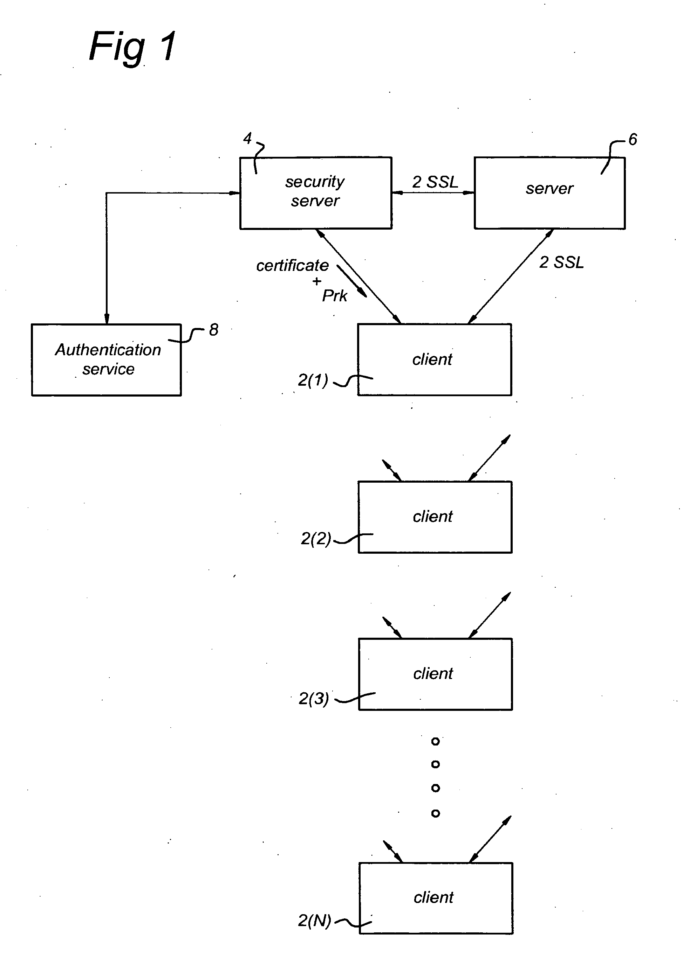

In the present invention, a security server 4 is used which is e.g. shown in figure 1. This document explains how the security server 4 allows the use of the benefits of digital certificates without the hassle, for a fraction of the costs and with the option of migration to a full-blown PKI infrastructure in the future left open. The first chapter gives a broad outline of the general principle of the security server 4. The following chapters deal with the more technical aspects of individual components and the way they address the issues involved in securing communication with digital certificates.

In order to better understand the present invention, first a brief explanation of digital certificates is provided. The explanation is as follows and is copied from Computer Desktop Encyclopedia, 1981-2005, The Computer Language Company Inc., Ver. 18.4, 4th Quarter 2005:

### "digital certificate

*The digital equivalent of an ID card used in conjunction with a public key encryption system. Also called "digital IDs,"digital certificates are issued by a trusted third party known as a "certification authority" (CA) such* as *VeriSign (www.verisign.com) and Thawte (www.thawte.com). The* CA *verifies that a public key belongs to a specific company or individual (the "subject"), and the validation process it goes through to determine if the subject is who it claims to be depends on the level of certification and the CA itself.*

### Creating the Certificate

*After the validation process is completed, the CA creates an X.509 certificate that contains CA and subject information, including the subject's public key (details below). The* CA *signs the certificate by creating a digest (a hash) of all the fields in the certificate and encrypting the hash value with its private key. The encrypted digest is called a "digital signature," and when placed into the X*. *509 certificate, the certificate is said to be "signed."*

*The CA keeps its private key very secure, because if ever discovered, false certificates could be created. See HSM.*

### Verifying the Certificate

*The process of verifying the "signed certificate" is done by the recipient's software, which is typically the Web browser. The browser maintains an internal list of popular CAs and their public keys and uses the appropriate public key to decrypt the signature back into the digest. It then recomputes its own digest from the plain text in the certificate and compares the two. If both digests match, the integrity of the certificate is verified (it was not tampered with), and the public key in the certificate is assumed to be the valid public key of the subject.*

### Then What...

*At this point, the subject's identity and the certificate's integrity (no tampering) have been verified. The certificate is typically combined with a signed message or signed executable file, and the public key is used to verify the signatures (*.. ..). *The subject's public key may also be used to provide a secure key exchange in order to have an encrypted two-way communications session (*.. *)*...

### Major Data Elements in an X.509 Certificate:

• *Version number of certificate format*
**•** *Serial number (unique number from CA)*
• *Certificate signature algorithm*
• *Issuer (name of CA)*
• *Valid-from*/*valid-to dates*
• *Subject (name of company or person certified)*
• *Subject's public key and algorithm*
• *Digital signature created with CA's private key*

### Signing and Verifying a Digital Certificate

*The signed certificate is used to verify the identity of a person or organization.*"

By using a public key and a private key, asymmetrical encryption can be applied in communications: one party uses a public key to encrypt a message addressed to a third party, and the third party who possesses a private key associated with this public key uses this private key to decrypt the encrypted message. Decryption cannot be done with the public key itself.

Moreover, a public key and a private key can be used in a digital signing process as follows: one party signs a message with a digital signature that is calculated from the content of the message itself using a private key. The digital signature has a unique relation with the content of the message. A third party who possesses the associated public key checks the relation between the digital signature and the content of the received message. If there is a match, the third party knows that the content of the message has not been tampered with.

### The product & services

### The basic concept

In one embodiment, as shown in figure 1, the architecture according to the invention comprises three parties interacting in order to create a secure channel between a digital service and a client: i.e., the digital service supported by a server 6, e.g. a webserver, a client 2(n) (n = 1, 2, ..., N) and the security server 4. A client is here defined as a computer arrangement in its role as a client. A client may be any kind of terminal, like a personal computer, a lap top, a PDA (personal digital assistant), a smart phone, etc., but may, alternatively, be a router.

Figure 1 shows these entities connected to one another in a network environment. Figure 1 shows several clients 2(1)... 2(N), a security server 4, a server 6 capable of running a service which supports the X.509 standard, or compatible, like a bank server or a webserver. The clients 2(n) and the server 6 are provided with suitable software and, thus, arranged to perform secure communications via the network, e.g., using a SSL digital certificate or other secure network communication protocol. Moreover, the security server 4 is provided with suitable software such that the security server 4 can securely communicate with the server 6, e.g., using a SSL digital certificate or other secure network communication protocol. It is observed that a client may be a personal computer of a private person located at his/her premises. Nowadays, most people have at least one such personal computer equipped with such suitable software, obtained via software from a bank, e.g. loaded on the personal computer from a CD-ROM or DVD, in order to allow "private banking" with a bank server via the internet.

In order to authenticate users of clients 2(n), the security server 4 is arranged with an authentication module to perform authentication and that may be implemented as a software program on a suitable processor. Alternatively, security server 4 may be connected to an external authentication service 8 running on a suitable server that provides the desired authentication upon request from security server 4.

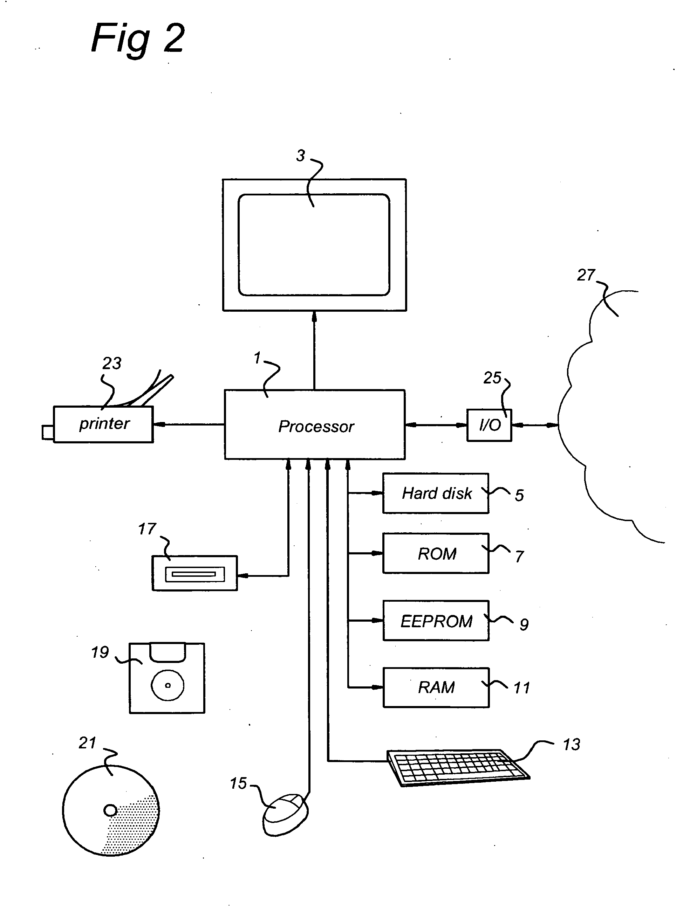

Figure 2 shows a schematic overview of a computer arrangement in general. Such a computer arrangement can be used as client 2(n) but also the security server 4 and the server 6 may have most of the components of the computer arrangement shown in figure 2. Each one of the clients 2(n), the security server 4 and the server 6 will have at least a processor and some form of memory storing data and instructions to let the processor run a predetermined program to perform functionality in accordance with the invention.

The computer arrangement shown in figure 2 comprises a processor 1 for carrying out arithmetic operations. The processor 1 is connected to a plurality of memory components, including a hard disk 5, Read Only Memory (ROM) 7, Electrically Erasable Programmable Read Only Memory (EEPROM) 9, and Random Access Memory (RAM) 11. Not all of these memory types need necessarily be provided. Moreover, these memory components need not be located physically close to the processor 1 but may be located remote from the processor 1.

The processor 1 is also connected to means for inputting instructions, data etc. by a user, like a keyboard 13, and a mouse 15. Other input means, such as a touch screen, a track ball and/or a voice converter, known to persons skilled in the art may be provided too.

A reading unit 17 connected to the processor 1 is provided. The reading unit 17 is arranged to read data from and possibly write data on a data carrier like a floppy disk 19 or a CDROM 21. Other data carriers may be tapes, DVD, etc. as is known to persons skilled in the art.

The processor 1 is also connected to a printer 23 for printing output data on paper, as well as to a display 3, for instance, a monitor or LCD (Liquid Crystal Display) screen, or any other type of display known to persons skilled in the art.

The processor 1 may be connected to a communication network 27, for instance, the Public Switched Telephone Network (PSTN), a Local Area Network (LAN), a Wide Area Network (WAN), the Internet, etc. by means of I/O means 25. The processor 1 is arranged to communicate with other communication arrangements through the network 27.

The data carrier 19, 21 may comprise a computer program product in the form of data and instructions arranged to provide the processor with the capacity to perform a method in accordance with the invention. However, such computer program product may, alternatively, be downloaded via the telecommunication network 27.

The processor 1 may be implemented as stand alone system, or as a plurality of parallel operating processors each arranged to carry out subtasks of a larger computer program, or as one or more main processors with several sub-processors. Parts of the functionality of the invention may even be carried out by remote processors communicating with processor 1 through the network 27.

Features of the different entities in figure 1 may be as follows:

### Digital service by server 6:

Any server 6 capable of running a service which supports the X.509 standard, or equivalent, and that requires a secure connection to a client 2(n) can be used in combination with the security server 4.

### Client 2(n):

- An end-user of the client 2(n) may install suitable software from the security server 4. Any known secure way, e.g. using code signing or using a traditional X509 technology, to download software from a server to a client may be used for that purpose.
- When installed the software on the client 2(n) controls the user interface and contains the logic to establish secure channels with the security server 4.
- the software on the client 2(n) may use credentials retrieved from the security server to establish secure channels with digital services, using open and standards based technology, such as two-sided SSL/TLS.

### Security server 4:

- The central security server 4 handles incoming requests from clients 2(n). Depending on the activated modules and the selected security and escalation levels the security server 4 deals with every incoming request based on the settings selected for the corresponding digital service on server 6. When the service is under attack, the security level can be tuned right away to a higher level, to avoid damages.

### 2. CONCEPTS

### Securing communication lines

Nowadays, digital certificates are used on a regular basis. When one accesses a 'secure' website on the Internet, for instance when booking a flight on-line, a digital certificate is used at the side of server 6. This digital certificate is used for two purposes. It is used for the encryption of the connection and it tells the web browser of the client 2(n) that the website the browser is connecting to really is the website the browser *thinks* he is connecting to. In that sense, the digital certificate used by server 6 serves the purpose of authenticating server 6, like a passport can be used to authenticate an owner of that passport. The browser of client 2(n) checks the authenticity of every piece of information coming from the server 6 during the whole session.

When one looks at the information flowing from the browser to the server 6, however, it is evident that the situation is not totally secure after all. While information coming from the server 6 is validated during the whole session, the authenticity of the information coming from the client 2 (n) is checked only once: i.e., when the user logs in. After that, the server 6 has no way of telling whether the next piece of information is coming from the same client 2(n) and has not been tampered with. For checking the client 2(n) continuously during the whole communication session, the client 2(n) needs a digital certificate that can be checked by the server 6 too. If both server 6 and client 2(n) have and use a valid digital certificate the communication is secure in both ways.

The same principle is valid for email communications. Digital certificates have to be used at both sides to encrypt and/or sign messages. If signed, a receiver of an email can check the authenticity of the message and if encrypted, it is unreadable to anyone but the receiver provided the receiver has a decryption key.

### Managing digital certificates

For servers 6, the management of digital certificates is not a big issue. The number of servers 6 is small, digital certificates can be arranged and installed as needed and incidents can be dealt with on an ad-hoc basis. The knowledge of the administrators and other people involved can easily be maintained.

For clients 2(n), the situation is different. End-user PC's and other clients 2(n) are more vulnerable to security breaches, viruses and other incidents that make the digital certificate lose its value. It might have been copied. If so, a new digital certificate must be arranged and installed. And the old digital certificate must be 'blacklisted' on the server 6. The compromised digital certificate itself might be valid for another year or even longer. And how to teach *each* end-user how to handle digital certificates and deal with incidents?

In the invention, the security server 4 takes care of the end-user part of the digital certificate. The security server 4 authenticates the client 2(n) in accordance with a predetermined reliability level, and, if successful, provides the client 2(n) with the means to use a digital certificate, as will be explained below. Different ways of authentication may be selected to provide different levels of reliability.

Using the concept of the invention, communication between a client 2(n) and a server 6 is completely secured without requiring any technical knowledge from the end-user.

As will be explained in detail below, issuing a digital certificate to a client 2(n), installation of the digital certificate and management of the validity of the digital certificate, etc. is controlled by the security server 4, every time it is needed.

### Escalation

Within security, the level of security strongly depends on investments (costs) to prevent misuse versus damage (costs) when misuse occurs. This is also the case within the ICT environment. Whereby one can wonder: "Does everybody within an organization realize what damage means?" For a financial organization, intrusion could mean a (temporary) loss of money, which can be controlled by using transaction limits. Loss of imago however, can result in delayed introduction of new services, meaning loss of revenue and profit for the short and long term. With the concept of the present invention, different required levels of security can be recognized and organizations using this platform are allowed to escalate their security level when the stakes get higher or the need arises. This security level is associated with the authentication process performed by the security server 4 to authenticate a client 2(n).

To understand the concept of escalation, first some general explanation is given as to possible levels of security in a client-server environment.

At the authentication level (when one logs in at a website) several options are available that each relate to a different security level:
- Using a password
- Using a one-time password (i.e., with each log-in a new password is used)
- Using a challenge-response protocol (a question from the server is received by a client 2(n) which only the client 2(n) can understand)
- Using a hardware token (e.g. USB);
- Using a smart card (e.g. GemPlus, Schlumberger);
- Using a biometric feature (e.g. fingerprint, iris recognition).

In general: the more secure, the higher the costs.

The used security level depends on the value of the services to be provided by server 6 as well as existing threats. Both parameters can change over time. Increasing the level of security is called escalation.

The same concept of authentication can be used when a client 2(n) has to log-in to security server 4. With the security server 4, the administrator can do a number of escalations, without bothering the end-users. Some other enhancements of security require actions at the user side (e.g. Microsoft security updates, installation of client software necessary for the invention or maybe the use of a hardware token). The invention provides a platform and not so much a tool, and therefore allows the integration of all kinds of security measures without affecting the basic functionality. For instance, the method of authentication (password, challenge-response, hardware token) can be changed while all other implemented modules and functionalities continue to work as they did before. This will be explained in detail below.

### 3. Platform

The invention was developed bearing in mind that the product should not only handle the security needs of today but also those of the future. As a result, it was built as a platform with plug-in modules. The platform handles the generic functionality needed for all services. The modules handle specialised functionalities such as authentication and email support. This leaves room to upgrade functionalities while leaving the platform in place. New services can be easily integrated without disturbing the other services.

### Seamless integration, choice of platforms

The importance of the fact that server components have to integrate seamlessly into existing ICT environments has been acknowledged. The central environment of the invention can be implemented on a choice of platform varying from Linux to mission critical environments such as the HP NonStop platform.

Communication and integration with existing ICT systems, such as databases and authentication infrastructures, is made easy by the use of open and standards based technology.

### PC's, PDA's and future devices

The benefits are not restricted to use only on PC's, but can be extended to mobile devices such as PDA's and smart phones. The use of open and standards based technology guarantees that future devices will also support the technology as described here.

### Platform architecture

In an embodiment, the authentication architecture consists of three parties interacting in order to create a secure connection between a client and a webserver.

### Client application software.

The client 2(n), after the user is authenticated, receives client application software from the security server 4. Any known technique to securely download such software from security server 4 may be used. Instead, the software may have been loaded from a suitable CD-ROM or the like. The application software is lightweight application software that is responsible for the retrieval of a valid temporary digital certificate, e.g. a X.509 digital certificate, from the security server 4. The client application software provides the user interface to the solution of the present invention. It presents the user of client 2(n) with the necessary dialog boxes and contains the logic to create a secure connection with the security server 4. The secure connection may be based on a Diffie-Hellman protocol. It implements the encrypted communication between the security server 4 and client 2(n).

### Basic process

The basic process is explained with reference to a situation in which client 2(n) wishes to set up a secure connection with server 6 that is a bank server that supports secure communications by using its own bank server digital certificate including a bank public key BPuK and an associated bank server private key BPrK stored in its memory in a safe way. It is assumed that the client 2(n) has stored suitable software in its memory to communicate with security server 4, as explained in the preceding section. Then there are two separate stages in setting up the secure connection. These two stages are performed in sequence and are independent of each other:
- first stage:
   In the first stage, the client 2(n) receives a digital certificate and a private key after being authenticated, as follows.
   To that end, the client 2(n) establishes a connection with the security server 4. During setting up the connection, several data are exchanged between the client 2(n) and the security server 4. The client 2(n) sends data so as to have him authenticated by the security server 4, using one of the methods referred to above. Authentication may be based on an authentication service controlled by security server 4 itself or by external authentication service 8. After a successful authentication, the security server 4 sends a temporary digital certificate to client 2(n), as well as a private key that is associated with the public key within the temporary digital certificate. The private key associated with the public key can be transmitted from the security server 4 to the client 2(n) using the software on the client 2(n) that can support a secure connection, e.g., based on the Diffie-Hellman protocol, between the two. The digital certificate and the private key can, e.g., be securely transmitted in a so-called PCKS #12 packet. However, the invention is not restricted to this.
- second 'stage:
   In the second stage, the client 2(n) carries out the secured communication session with the bank server 6. This communication can now be secured from both sides since, now, both the client 2(n) and the bank server 6 possess their own digital certificate and their own private keys. So, they can setup a so-called two-sided SSL (SSL = Secure Sockets Layer). This is controlled by the application software and key pair as downloaded from the security server 4 in the first stage. The second stage is not controlled by the security server 4.

In accordance with the invention, the certificate as sent by the security server 4 to the client 2(n) has only a predetermined limited lifetime. Such a predetermined lifetime may be expressed in the form of a time period, e.g., a number of hours such as a maximum of 24 hours or 1 hour, a number of minutes less than 60 minutes, or a number of seconds less than 60 seconds. Alternatively, the duration may be defined as being coupled to a predetermined number of communication sessions with a third party, e.g., 1 session. As a further alternative, the lifetime may be defined as being coupled to a predetermined number of actions, like retrieving one or more messages from a webserver or an email server, as will be explained later. As a further alternative, the limited lifetime may be defined as a predetermined maximum number of usages, like 1 or less than 10. The limited lifetime is included in one of the attributes of the temporary digital certificate. E.g., if the validity is expressed in units of time, the valid-from/valid-to attribute can be used. Alternatively, an additional attribute may be used to indicate the limited lifetime. The software as installed in the client 2(n) is arranged to recognize this attribute and use it to remove the digital certificate.after the validity has expired.

### On-line service

One of the major benefits of the architecture is that the on-line service can usually be made available without modification. As long as the security is dealt with using standard digital certificates (which is the case for most on-line services), the solution of the invention integrates with the on-line service without the need to modify the service. Of course, in the case of a non standards based on-line service, a custom module could be developed to make the security available for this service as well.

### Servers and platform

The security server 4 processes incoming requests from clients 2(n) as controlled by the client application software installed on the client 2(n). The security server 4 controls the protocol that is required to generate the required key pairs on request. Optionally the security server 4 can also manage a database which stores accounts, available key pairs and valid digital certificates, process database queries from other daemons and manage a stock of available encryption keys. When the amount of available keys drops below a certain lower threshold, the security server 4 may generate new keys until an upper threshold is reached.

### 4. Platform options

### Digital certificate Authority

The platform is used for the distribution and management of digital certificates. These digital certificates need to be generated first. This is done using a so-called Digital certificate Authority. This is basically a digital certificate itself and the key is used to generate and sign new digital certificates. Most companies do not have a Digital certificate Authority (CA) of their own. Therefore, the security server 4 has an option to use an internal CA to generate the digital certificates. But some companies do have their own CA (from Baltimore for example). Therefore, the security server 4 also has the option to use digital certificates generated by such a third party CA.

### Authentication

Two groups of user authentication may be distinguished:
a) User authentication using an internal authentication mechanism. This internal authentication mechanism may be based on any of the authentication mechanisms explained above.
b) User authentication using an existing external authentication system, like via authentication service 8, and using the results from the external authentication in the symmetric key generation process. (e.g. Vasco Digipass with one-time password). To that end, the security server 4 connects to an authentication processor associated with the bank server 6 which does the actual authentication after the user of client 2(n) has sent his/her credentials. In this case an existing user administration can be used and integrated in the platform.

### Key generation

When using the internal Digital certificate Authority, the keys that are generated for use in the digital certificates can be generated in advance and stored in the database controlled by the security server 4. This can be done at times when the security server 4 is not handling much traffic. Then, later when the security server 4 is busy no processing power is needed for key generation as the key can be retrieved from the database.

An other option is to get the key at the moment it is needed. If security server load is no issue, this gives the easiest implementation. It is also possible to retrieve the digital certificate from an external source at the moment it is needed. In that case, the key generation takes no processing power either.

### 5. Further embodiments

Now, some further embodiments of the present invention will be explained.

### a. Email Module

### Concept

Email is one of the most commonly adopted functionalities offered by the Internet. Although the use is straightforward and widespread, this is also one of the least secure ways of communication. This is the case unless encryption and signatures are used to secure the email conversation. Just as with web browsing this can be accomplished using digital certificates issued by the security server 4.

To that end, in an embodiment, clients 2(n) are provided with a special secure email module.

In an embodiment, a key pair including a public key PuK(i) and an associated private key PrK(i) that, together, are associated with an issued digital certificate are stored in the database of the security server 4. This is done to prevent a sent and/or received email protected by this digital certificate from becoming unreadable due to the digital certificate not being valid anymore. If the digital certificate has become invalid, based on this stored key pair PuK(i), PrK(i) the security server 4 can generate a new temporal digital certificate that can be used to read the email concerned. An additional advantage is that secured email can be transmitted from any system provided with this secure email module.

### Functionality

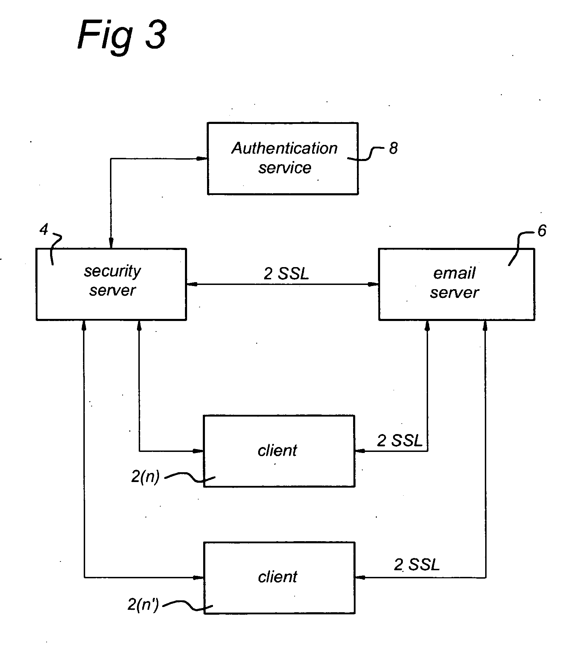

The secure email module will be explained with reference to figure 3. Components with the same reference number as in figures 1 and 2 refer to the same components. Figure 3 shows an email server 10 connected to clients 2(n) and 2(n') (n ≠ n'). Assume, a user of client 2(n) wishes to send an email message to client 2(n') in a secure way. Then, the user starts an email application (e.g. Windows Outlook). In the same way as explained above, he receives a temporary digital certificate including a public key PuK(1) from the security server 4. Moreover, as explained above, he receives an associated private key PrK(1) from security server 4.

In the same way, client 2(n') collects a temporary digital certificate from security server 4. Then, client 2(n') has a public key PuK(2) and a private key PrK(2).

Now, secure email exchange between clients 2(n) and 2(n') can be performed. E.g., client 2(n) may wish to digitally sign an email to be sent to client 2(n'). Then, client 2(n) signs the email while using his private key PrK(1). Client 2(n) sends his public key PuK(1) to client 2(n') who uses this public key PuK(1) to verify that the content of the email has not been tampered with.

If client 2(n) wishes to send an encrypted email to client 2(n') he requests client 2(n') to send him his public key PuK(2). Upon receipt of this public key PuK(2) he encrypts the email with the public key PuK(2) and then send the email to email server 10. Client 2(n') read the email from email server 10 and decrypts the email with his private key PrK(2).

The digital certificate as used by client 2(n) may be valid only for a predetermined short time period, as explained above. Alternatively, the digital certificates is only valid for one email message. As a further alternative, the digital certificate may be valid as long as the email client software is active. Then, as soon as the user closes the email client software, the digital certificate is removed from the client 2(n). The validity of the digital certificate of client 2(n') is also limited in time, e.g., that digital certificate is only valid for a single email and/or during one hour.

Again, the way the validity of the digital certificate is limited in time is defined by an attribute in the digital certificate itself. The software as installed in the clients 2(n), 2(n') is arranged to recognize this attribute and use it to remove the digital certificate after the validity has expired.

### b. Signing Module

### Concept

Just like in the email module, the client 2(n) can be provided with a digitally signing module used to digitally sign digital documents.

### • Functionality

In the same way as explained with reference to the email module, client 2(n) receives a temporary digital certificate including a public key PuK(1) from the security server 4. Moreover, as explained above, he receives an associated private key Pry(1) from security server 4.

Then, client 2(n) signs the document while using his private key PrK(1). Client 2(n) may store the signed document in his own memory. Alternatively, client 2(n) may send the signed document to another client 2(n'). If so, client 2(n) sends his public key PuK(1) to client 2(n') who uses this public key PuK(1) to verify that the content of the email has not been tampered with.

As a further alternative, client 2(n) sends the signed document to a central database where it is stored for administrative or legal reasons. Then, any third parties client 2(n') can retrieve this document from the central database and verify its content while using public key PuK(1):

Again, the digital certificate as used by client 2(n) may be valid only for a predetermined short time period, as explained above. Alternatively, the digital certificate is only valid for signing a predetermined limited number of documents, e.g. 1 document.

Again, the way the validity of the digital certificate is limited in time is defined by an attribute in the digital certificate itself. The software as installed in client 2(n) is arranged to recognize this attribute and use it to remove the digital certificate after the validity has expired. By using criteria on one or more of the digital certificate attributes, the digital certificate can also be used for non-standard use, e.g. for a validity in the future.

### c. Phishing/pharming module

### Concept

The use of the Internet for financial and business transactions is growing day by day. With the growing amount of money involved in on-line transactions, the interest of organised crime is growing as well. And computer crimes get to be more creative as a result. Phishing attacks use 'spoofed' e-mails to lead consumers to counterfeit websites designed to trick recipients into divulging financial data such as credit card numbers, account usernames, passwords and social security numbers. Hijacking brand names of banks, e-retailers and credit card companies, phishers often convince recipients to respond.

Similar security issues arise in case of "pharming" in which somebody sets up a look-alike of an existing website.

The present invention, by means of a phishing/pharming module, can stop unsuspecting customers from giving their valuable personal data to criminals. The phishing/pharming module can block access to phishing and/or pharming websites, as will be explained below.

While establishing a connection between a client 2(n) and security server 4 to obtain a temporary digital certificate, data is exchanged between the two. In this phase, security server 4 sends data to client 2(n) regarding potential phishing attacks and pharming. Client 2(n) may use this data to prevent such a phishing attack and/or pharming.

### Functionality

Phishing schemes direct unsuspecting victims to a fake website posing to be a known company. Pharming schemes direct users to look-alike websites. A phishing/pharming module installed on client 2(n) prevents this in the following way.

The phishing/pharming module is arranged to have the client 2(n) contact security server 4. The time this connection is made may be automatically triggered by the phishing/pharming module. The trigger may, e.g., be the moment client 2(n) starts a webbrowser which is recognized by the phishing/pharming module. Upon detecting the webbrowser to start, the phishing/pharming module automatically retrieves actual data from security server 4 regarding actual phishing and/or pharming threats. This data contains data as to sites relating to the potential phishing and/or pharming threats. The phishing/pharming module informs the webbrowser of these potential phishing/pharming threats sites. The webbrowser uses this information to e.g. block access to these sites or to send a warning to the user of client 2(n).

### d. Central storage of digital certificate and private key

In the embodiments above, it has been explained that the temporary digital certificate and associated private key are sent by security server 4 to client 2(n) and stored in the memory of client 2(n). However, in order to enhance security, in an alternative embodiment, the digital certificate and associated private key once generated or identified as being associated with client 2(n) can be stored in a central database monitored and possibly controlled by security server 4. Such a database may be located in the security server 4 or remote thereof. If so, such a centrally stored digital certificate and associated private key may be used in a digitally signing operation performed at a third parties server 6, e.g., a server of a governmental organization. That third parties server can set up a secure connection with the security server 4 in order to access the centrally stored certificate and associated private key. The third parties server then uses the received private key to sign a message intended for client 2(n) and sends the signed message to the client 2(n). It also sends the public key present in the digital certificate to client 2(n) which it uses to verify the content of the signed message.

In an alternative embodiment thereof, the client 2(n) uses a temporary certificate associated with a public key and an associated private key both centrally stored under the control of security server 4. So, in this case the private key and public key associated with the certificate are copies from the respective keys of a key pair that remains centrally stored and can be accessed afterwards by security server 4. Such temporary certificate is received from security server 4 in the way as explained above. Then, the private key associated with the temporary certificate is used by client 2(n) to sign an official form when sent to e.g. an official entity like the tax authorities. The public key associated with the temporary certificate is sent to the authorities too, and used by them to verify the content of the form received. This is an advantageous embodiment when entities like the tax authorities require one to use centrally stored keys. Moreover, the tax authorities can check with the security server 4 whether the used public key belongs to a key set that is centrally stored.

### e. Using key pairs more than once.

In a further embodiment, the security server 4 stores one or more sets of key pairs including a public key and an associated private key, and each time a client requests to send a temporary certificate, transmits such a certificate with a copy of one of those key sets. So, in this embodiments key sets can be used more than once. Note, that the certificate changes every time for the same key set since the certificate comprises more data than just the key set.

### 6. User issues

The solution of the invention is technically sound and user friendly, as will be explained now. This paragraph describes the effects the invention will have on the users of services, which use the technology as described here.

### Installation

Installation activities on the customer side are reduced to an absolute minimum. Installation of the required functionality on the client side can be performer while using state of the art technology and, in general, does not require hardware installation.

### User friendliness

The authentication mechanism as explained above, is very easy to use. Once installed on a client 2(n) the authentication software on the client 2(n) establishes a secure connection without any client interference other than entering credentials, such as USER ID and password, depending on the chosen authentication method. Also, since the client software is generic, it can be distributed via the Internet.

### End-user discipline

The authentication process is fully transparent and invisible to the end-user and does not require any end-user intervention. The authentication makes life not only easier for the (user of) client 2(n) by making the client 2(n) responsible for the authentication, but also for the service provider of a website because the webserver supporting the website can identify the client 2(n) in a reliable way and can rely on the fact that no-one can mislead the client 2(n).

### Implementation

In general the introduction of a secure communication platform requires a substantial implementation period and budget, because keys need to be distributed to all clients 2(n). In some cases, special hardware may be required. In the case of the invention, the only requirement is a small generic software client, which can be downloaded via the Internet or distributed via CD-ROM. The technical impact of the described platform is also minimal. The security server 4 can be placed either inside or outside the environment of the service provider of a website.

### Organizational impact

When using a PKI the service provider must not only administer which digital certificates have been issued, but also which digital certificates must be revoked. This requires a large and efficient administration. Another organizational impact is training. When new technology is introduced into a company, people must be trained. If a PKI project uses a smart card, then the help desk must also be trained in answering questions regarding this kind of devices. Maintenance must be set up, stocks must be watched and the product must be kept up-to-date.

Unlike full scale PKI solutions implementation of the invention does not require implementation of complex processes and extensive training within organizations.

### Operations

The solution can easily be administered and maintained centrally: it supports real-time central management of all remote client access privileges, communication protection and digital certificate management. An administrator can dynamically react to changes in the security situation, enrol new users or services and delete old ones.

### Financial

From a financial perspective, the invention distinguishes itself from other solutions when reviewing the price-performance ratio. The total initial cost per user is low since the client requires no special hardware. The recurring costs, which often are very high, usually are caused by comprehensive customer support. Authentication as explained above, requires minimal involvement from the end-user since his client 2(n) does the work required. Once the client software is installed on the client 2(n), end-user intervention is no longer required. There is also little impact on the organization. No new departments need to be set up.

### Calamities

When using PKI the entire infrastructure relies on the integrity of central components such as a Digital certificate Authority (CA). In the event where the integrity of one of the essential components or procedures cannot be guaranteed any more, all issued digital certificates must be revoked and replaced by new digital certificates. The impact of such an event is substantial, especially when secure USB tokens, smart cards or any other hardware tokens are used for digital certificate storage. All tokens will have to be replaced. In today's insurance markets the lack of historic data makes it very difficult to insure against such risks.

When the security server 4 would be compromised, reinstalling the security server 4 will reinstate the integrity of the entire system. Reinstallation of the security server 4 has no impact on the users of services that use the described technology.

## Claims

1. A method of secure data transmission in a communication session between a client (2(n)) and a third party computer arrangement (2(n'); 6), comprising:
a) setting up an initial secure, encrypted communication session between said client (2(n)) and a security server (4) via a public communication network that is connecting said client (2(n)) and said security server (4) while using client application software installed on the client (2(n));
b) in said initial secured, encrypted communication session, authenticating a user of said client (2(n)) in an authentication process controlled by said security server (4) while using an authentication protocol with a predetermined security level;
c) in said initial secure, encrypted communication session, transmitting to said client (2(n)) a private key (PrK(i)) and a digital certificate comprising a public key (PuK(i)) and one or more attributes, said private key (PrK(i)) being associated with said public key (PuK(i)), said digital certificate and said private key being associated with said client (2(n));
d) in said initial secure, encrypted communication session, automatically installing said digital certificate and private key on said client (2(n));
e) performing said secure data transmission in said communication session between said client (2(n)) and said third party computer arrangement (2(n'); 6) while using said public key (PuK(i)) and said private key (PrK(i));
wherein said digital certificate has a limited life time defined by at least one attribute,
said at least one attribute defining at least one of:
• a predetermined duration in time;
• a predetermined number of communication sessions;
• a predetermined number of actions.

2. Method according to claim 1 ,wherein said initial secure, encrypted communication session uses a Diffie-Hellman protocol.

3. Method according to claim 1 or 2, wherein said digital certificate and said private key are transmitted from said security server (4) to said client (2(n)) in a PCKS #12 packet

4. Method according to any of the claims 1, 2 or 3, wherein said digital certificate comprising said public key (PuK(i)) and one or more attributes, and said private key (PrK(i)) associated with said public key (PuK(i)), after being made available, are sent to said client (2(n)) and are stored by said client (2(n)).

5. Method according to any of the claims 1, 2 or 3, wherein said digital certificate comprising said public key (PuK(i)) and one or more attributes, and said private key (PrK(i)) associated with said public key (PuK(i)), after being made available, are stored by said security server (4).

6. Method according to any of the preceding claims, wherein said authenticating action is based on at least one of:
• Using a password,
• Using a one-time password,
• Using a challenge-response protocol,
• Using a hardware token,
• Using a smart card, and
• Using a biometric feature.

7. Method according to any of the preceding claims, wherein said secure data transmission is based on at least one of encrypting said data with said public key (PuK(i)) and digitally signing said data with said private key (PuK(i)).

8. Method according to any of the preceding claims, wherein
• if said at least one attribute defines a predetermined duration in time, said duration in time is a lifetime of less than 24 hours, preferably less than 1 hour,
• if said at least one attribute defines a predetermined number of communication sessions said number of communication sessions is one,
• if said at least one attribute defines a predetermined number of actions said number of actions is one.

9. Method according to claim 8, wherein said action is defined as one active period of a webbrowser running on said client (2(n)).

10. Method according to any of the preceding claims, wherein said authenticating action is performed by at least one of an authentication service internal to said security server (4) and an authentication service (8) external to said security server (4).

11. Method according to any of the preceding claims, wherein said public key (PuK(i)) and said private key (PrK(i)) are copies of keys of a centrally stored key set that remains stored after said public key (PuK(i)) and said private key (PrK(i)) are made available and where said copies of said keys are made available one or more times.

12. A system comprising a client (2(n)), a security server (4) and a third party computer arrangement (2(n'): 6) in which:
a) said client (2(n)) and said security server (4) are arranged to set up an initial secure, encrypted communication session between them via a public communication network that is connecting said client (2(n)) and said security server (4) while using client application software installed on the client (2(n));
b) said security server (4) is arranged to control in said initial secure, encrypted communication session, authentication of a user of said client (2(n)) while using an authentication protocol with a predetermined security level;
c) said security server (4) is arranged to transmit in said initial secure, encrypted communication session, to said client (2(n)) a private key (PrK(i)) and a digital certificate comprising a public key (PuK(i)) and one or more attributes, said private key (PrK(i)) being associated with said public key (PuK(i)), said digital certificate and said private key being associated with said client (2(n));
d) said client (2(n)) being arranged to automatically install in said initial secure, encrypted communication session, said digital certificate and private key;
e) said client (2(n)) and said third party computer arrangement (2(n'); 6) are arranged to perform a secure data transmission in a communication session between them while using said public key (PuK(i)) and said private key (PrK(i)):
wherein said system comprises a processor for identifying that said digital certificate has a limited life time defined by at least one attribute and removing said digital certificate upon expiry of said lifetime, said at least one attribute defining at least one of:
• a predetermined duration in time:
• a predetermined number of communication sessions;
• a predetermined number of actions.

13. System according to claim 12, wherein the system is arranged to perform any of the methods as claimed in claims 2 - 11.

14. A security server comprising a processor and memory, the memory storing data and instructions to let said processor run a predetermined computer program, said program allowing said security server to:
a) set up an initial secure, encrypted communication session with a client (2(n)) via a public communication network that is connecting said client (2(n)) and said security server (4) while using client application software installed on the client (2(n);
b) in said initial secure, encrypted communication session, authenticate a user of said client (2(n)) while using an authentication protocol with a predetermined security level:
c) in said initial secure, encrypted communication session, transmitting to said client (2(n)) a private key (PrK(i)) and a digital certificate comprising a public key (PuK(i)) and one or more attributes, said private key (PrK(i)) being associated with said public key (PuK(i)), said digital certificate and said private key being associated with said client (2(n));
wherein said digital certificate has a limited life time defined by at least one attribute,
said at least one attribute defining at least one of:
• a predetermined duration in time;
• a predetermined number of communication sessions;
• a predetermined number of actions.

15. A client (2(n)) comprising a processor and memory, the memory storing data and instructions to let said processor run a predetermined computer program, said program allowing said client (2(n)) to:
a) set up an initial secure, encrypted communication session with a security server (4) via a public communication network that is connecting said client (2(n)) and said security server (4) while using client application software installed on the client (2(n));
b) after being authenticated with a predetermined security level, receive, in said initial secure, encrypted communication session, a digital certificate comprising a public key (PuK(i)) and one or more attributes, and receive a private key (PrK(i)) associated with said public key (PuK(i));
c) automatically install in said initial secure, encrypted communication session, said digital certificate and private key;
d) perform a secure data transmission in a communication session between said client (2(n)) and a third party computer arrangement <2(n'): 6) while using said public key (PuK(i)) and said private key (PrK(i));
wherein said client (2(n)) comprises a processor for identifying that said digital certificate has a limited life time defined by at least one attribute and removing said digital certificate upon expiry of said lifetime, said at least one attribute defining at least one of:
• a predetermined duration in time;
• a predetermined number of communication sessions;
• a predetermined number of actions.

16. A method of performing a secure data transmission in a communication session between a client (2(n)) and a third party computer arrangement (2(n')); 6), comprising in said client (2(n)):
a) setting up an initial secure, encrypted communication session with a security server (4) via a public communication network that is connecting said client (2(n)) and said security server (4) while using client application software installed on the client (2(n));
b) after being authenticated with a predetermined security level, receiving in said initial secure, encrypted communication session, a digital certificate comprising a public key (PuK(i)) and one or more attributes, and receiving a private key (PrK(i)) associated with said public key (PuK(i)):
c) automatically installing in said initial secure, encrypted communication session, said digital certificate and private key;
d) performing a secure data transmission in a communication session between said client (2(n)) and a third party computer arrangement (2(n')); 6) while using said public key (PuK(i)) and said private key (PrK(i));
e) identifying that said digital certificate has a limited life time defined by at least one attribute and removing said digital certificate upon expiry of said lifetime, said at least one attribute defining at least one of:
• a predetermined duration in time;
• a predetermined number of communication sessions;
• a predetermined number of actions.

17. A security server as defined in claim 14, wherein said initial secure, encrypted communication session uses a Diffie-Hellman protocol.

18. A client (2(n)) as defined in claim 14, wherein said initial secure, encrypted communication session uses a Diffie-Hellman protocol.

19. A method as defined in claim 16, wherein said initial secure, encrypted communication session uses a Diffie-Hellman protocol.

## Patentansprüche

1. Verfahren zur sicheren Datenübermittlung bei einer Kommunikationsverbindung zwischen einem Client (2(n)) und einer Drittcomputeranordnung (2(n'); 6), umfassend:
a) Einrichten einer einleitenden, sicheren und verschlüsselten Kommunikationsverbindung zwischen dem Client (2(n)) und einem Sicherheitsserver (4) über ein öffentliches Kommunikationsnetzwerk, das den Client (2(n)) und den Sicherheitsserver (4) verbindet, wobei eine Client-Applikationssoftware verwendet wird, die auf dem Client (2(n)) installiert ist;
b) Authentifizieren eines Benutzers des Clients (2(n)) in einem Authentifizierungsvorgang, der von dem Sicherheitsserver (4) gesteuert wird, wobei ein Authentifizierungsprotokoll mit einem vorbestimmten Sicherheitsgrad verwendet wird, bei der einleitenden, sicheren und verschlüsselten Kommunikationsverbindung;
c) Übermitteln an den Client (2(n)) eines privaten Schlüssels (PrK(i)) und eines digitalen Zertifikates, das einen öffentlichen Schlüssel (PuK(i)) und wenigstens ein Attribut enthält, bei der einleitenden, sicheren und verschlüsselten Kommunikationsverbindung, wobei der private Schlüssel (PrK(i)) mit dem öffentlichen Schlüssel (PuK(i)) assoziiert ist und das digitale Zertifikat sowie der private Schlüssel mit dem Client (2(n)) assoziiert sind;
d) automatisches Installieren des digitalen Zertifikates und des privaten Schlüssels in dem Client (2(n)) bei der einleitenden, sicheren und verschlüsselten Kommunikationsverbindung;
e) Ausführen der sicheren Datenübermittlung bei der Kommunikationsverbindung zwischen dem Client (2(n)) und der Drittcomputeranordnung (2(n'); 6), wobei der öffentliche Schlüssel (PuK(i) und der private Schlüssel (PrK(i)) verwendet werden;
wobei das digitale Zertifikat eine begrenzte Gültigkeit hat, die durch wenigstens ein Attribut definiert ist, und das wenigstens eine Attribut wenigstens einen der folgende Parameter definiert:
- eine vorbestimmte Zeitdauer;
- eine vorbestimmte Anzahl von Kommunikationsverbindungen und
- eine vorbestimmte Anzahl von Tätigkeiten.

2. Verfahren nach Anspruch 1, bei dem die einleitende, sichere und verschlüsselte Kommunikationsverbindung ein Diffie-Hellman-Protokoll verwendet.

3. Verfahren nach Anspruch 1 oder 2, bei dem das digitale Zertifikat und der private Schlüssel von dem Sicherheitsserver (4) an den Client (2(n)) in einem PCKS-#12-Paket übermittelt werden.

4. Verfahren nach einem der Ansprüche 1, 2 oder 3, bei dem das digitale Zertifikat, das den öffentlichen Schlüssel (PuK(i)) und wenigstens ein Attribut enthält, sowie der private Schlüssel (PrK(i)), der mit dem öffentlichen Schlüssel (PuK(i)) assoziiert ist, nachdem sie verfügbar gemacht wurden, zu dem Client (2(n)) gesendet und von dem Client (2(n)) gespeichert werden.

5. Verfahren nach einem der Ansprüche 1, 2 oder 3, bei dem das digitale Zertifikat, das den öffentlichen Schlüssel (PuK(i)) und wenigstens ein Attribut enthält, sowie der private Schlüssel (PrK(i)), der mit dem öffentlichen Schlüssel (PuK(i)) assoziiert ist, nachdem sie verfügbar gemacht wurden, von dem Sicherheitsserver (4) gespeichert werden.

6. Verfahren nach einem der vorhergehenden Ansprüche, bei dem die Authentifizierungstätigkeit auf wenigstens einem der folgenden Parameter basiert:
- Verwenden eines Passwortes,
- Verwenden eines einmal gültigen Passwortes,
- Verwenden eines Challenge-Response-Protokolls,
- Verwenden eines Hardware-Tokens,
- Verwenden einer Chipkarte und
- Verwenden eines biometrischen Merkmals.

7. Verfahren nach einem der vorhergehenden Ansprüche, bei dem die sichere Datenübertragung auf der Verschlüsselung dieser Daten mit dem öffentlichen Schlüssel (PuK(i)) und/oder dem digitalen Signieren der Daten mit dem privaten Schlüssel (PuK(i)) basiert.

8. Verfahren nach einem der vorhergehenden Ansprüche, bei dem
- sofern das wenigstens eine Attribut eine vorbestimmte Zeitdauer definiert, die Zeitdauer eine Gültigkeit von weniger als 24 Stunden, vorzugsweise weniger als 1 Stunde ist,
- sofern das wenigstens eine Attribut eine vorbestimmte Anzahl von Kommunikationsverbindungen definiert, die Anzahl von Kommunikationsverbindungen eins ist, und
- sofern das wenigstens eine Attribut eine vorbestimmte Anzahl von Tätigkeiten definiert, die Anzahl von Tätigkeiten eins ist.

9. Verfahren nach Anspruch 8, bei dem die Tätigkeit als eine aktive Periode eines Webbrowsers definiert ist, der auf dem Client (2(n)) läuft.

10. Verfahren nach einem der vorhergehenden Ansprüche, bei dem die Authentifizierungstätigkeit von einem Authentifizierungsdienst, der in dem Sicherheitsserver (4) enthalten ist und/oder einem Authentifizierungsdienst (8) ausgeführt wird, der nicht in dem Sicherheitsserver (4) enthalten ist.

11. Verfahren nach einem der vorhergehenden Ansprüche, bei dem der öffentliche Schlüssel (PuK(i)) und der private Schlüssel (PrK(i)) Kopien von Schlüsseln eines zentral gespeicherten Schlüsselsatzes sind, der gespeichert bleibt, nachdem der öffentliche Schlüssel (PuK(i)) und der private Schlüssel (PrK(i)) verfügbar gemacht wurden, wobei diese Kopien der Schlüssel wenigstens einmal verfügbar gemacht werden.

12. System, enthaltend einen Client (2(n)), einen Sicherheitsserver (4) und eine Drittcomputeranordnung (2(n'); 6), wobei:
a) der Client (2(n)) und der Sicherheitsserver (4) dazu eingerichtet sind, eine einleitende, sichere und verschlüsselte Kommunikationsverbindung zwischen sich über ein öffentliches Kommunikationsnetzwerk einzurichten, das den Client (2(n)) und den Sicherheitsserver (4) verbindet, wobei eine Client-Applikationssoftware verwendet wird, die auf dem Client (2(n)) installiert ist;
b) der Sicherheitsserver (4) dazu eingerichtet ist bei der einleitenden, sicheren und verschlüsselten Kommunikationsverbindung die Authentifizierung eines Benutzers des Clients (2(n)) zu steuern, wobei ein Authentifizierungsprotokoll mit einem vorbestimmten Sicherheitsgrad verwendet wird;
c) der Sicherheitsserver (4) dazu eingerichtet ist, bei der einleitenden, sicheren und verschlüsselten Kommunikationsverbindung an den Client (2(n)) einen privaten Schlüssel (PrK(i)) und ein digitales Zertifikat zu übermitteln, das einen öffentlichen Schlüssel (PuK(i)) und wenigstens ein Attribut enthält, wobei der private Schlüssel (PrK(i)) mit dem öffentlichen Schlüssel (PuK(i)) assoziiert ist und das digitale Zertifikat sowie der private Schlüssel mit dem Client (2(n)) assoziiert sind;
d) der Client (2(n)) dazu eingerichtet ist, bei der einleitenden, sicheren und verschlüsselten Kommunikationsverbindung das digitale Zertifikat und den privaten Schlüssel automatisch zu installieren; und
e) der Client (2(n)) und die Drittcomputeranordnung (2(n'); 6) dazu eingerichtet sind, eine sichere Datenübermittlung bei einer Kommunikationsverbindung zwischen ihnen auszuführen, wobei der öffentliche Schlüssel (PuK(i)) und der private Schlüssel (PrK(i)) verwendet werden;
wobei das System einen Prozessor enthält, um zu identifizieren, dass das digitale Zertifikat eine begrenzte Gültigkeit hat, die durch wenigstens ein Attribut definiert ist, und das digitale Zertifikat bei Ablauf dieser Gültigkeit zu entfernen, wobei das wenigstens eine Attribut wenigstens einen der folgenden Parameter definiert:
- eine vorbestimmte Zeitdauer;
- eine vorbestimmte Anzahl von Kommunikationsverbindungen und
- eine vorbestimmte Anzahl von Tätigkeiten.

13. System nach Anspruch 12, wobei das System dazu eingerichtet ist, eines der Verfahren nach Anspruch 2 bis 11 auszuführen.

14. Sicherheitsserver, enthaltend einen Prozessor und einen Speicher, wobei der Speicher Daten und Befehle speichert, um den Prozessor ein vorbestimmtes Computerprogramm ablaufen zu lassen, und das Programm es dem Sicherheitsserver gestattet:
a) eine einleitende, sichere und verschlüsselte Kommunikationsverbindung mit einem Client (2(n)) über ein öffentliches Kommunikationsnetzwerk einzurichten, das den Client (2(n)) und den Sicherheitsserver (4) verbindet, wobei eine Client-Applikationssoftware verwendet wird, die auf dem Client (2(n)) installiert ist;
b) bei der einleitenden, sicheren und verschlüsselten Kommunikationsverbindung einen Benutzer des Clients (2(n)) zu authentifizieren, wobei ein Authentifizierungsprotokoll mit einem vorbestimmten Sicherheitsgrad verwendet wird; und
c) bei der einleitenden, sicheren und verschlüsselten Kommunikationsverbindung zu dem Client (2(n)) einen privaten Schlüssel (PrK(i)) und ein digitales Zertifikat zu übermitteln, das einen öffentlichen Schlüssel (PuK(i)) und wenigstens ein Attribut enthält, wobei der private Schlüssel (PrK(i)) mit dem öffentlichen Schlüssel (PuK(i)) assoziiert ist und das digitale Zertifikat sowie der private Schlüssel mit dem Client (2(n)) assoziiert sind;
wobei das digitale Zertifikat eine begrenzte Gültigkeit hat, die durch wenigstens ein Attribut definiert ist und das wenigstens eine Attribut einen der folgenden Parameter definiert:
- eine vorbestimmte Zeitdauer;
- eine vorbestimmte Anzahl von Kommunikationsverbindungen und
- eine vorbestimmte Anzahl von Tätigkeiten.

15. Client (2(n)), enthaltend einen Prozessor und Speicher, wobei der Speicher Daten und Anweisungen speichert, um den Prozessor ein vorbestimmtes Computerprogramm ablaufen zu lassen, und dieses Programm es dem Client (2(n)) gestattet:
a) eine einleitende, sichere und verschlüsselte Kommunikationsverbindung mit einem Sicherheitsserver (4) über ein öffentliches Kommunikationsnetzwerk einzurichten, das den Client (2(n)) und den Sicherheitsserver (4) verbindet, wobei eine Client-Applikationssoftware verwendet wird, die auf dem Client (2(n)) installiert ist;
b) nach der Authentifizierung mit einem vorbestimmten Sicherheitsgrad bei der einleitenden, sicheren und verschlüsselten Kommunikationsverbindung ein digitales Zertifikat zu empfangen, das einen öffentlichen Schlüssel (PuK(i)) und wenigstens ein Attribut enthält, und einen privaten Schlüssel (PrK(i)) zu empfangen, der mit dem öffentlichen Schlüssel (PuK(i)) assoziiert ist;
c) bei der einleitenden, sicheren und verschlüsselten Kommunikationsverbindung das digitale Zertifikat und den privaten Schlüssel automatisch zu installieren und
d) eine sichere Datenübermittlung bei einer Kommunikationsverbindung zwischen dem Client (2(n)) und einer Drittcomputeranordnung (2(n'); 6) auszuführen, wobei der öffentliche Schlüssel (PuK(i)) und der private Schlüssel (PrK(i)) verwendet werden;
wobei der Client (2(n)) einen Prozessor enthält, um zu identifizieren, dass das digitale Zertifikat eine begrenzte Gültigkeit hat, die durch wenigstens ein Attribut definiert ist, und das digitale Zertifikat bei Ablauf der Gültigkeit zu entfernen, wobei das wenigstens eine Attribut wenigstens einen der folgenden Parameter definiert:
- eine vorbestimmte Zeitdauer;
- eine Vorbestimmte Anzahl von Kommunikationsverbindungen und
- eine vorbestimmte Anzahl von Tätigkeiten.

16. Verfahren zum Ausführen einer sicheren Datenübermittlung bei einer Kommunikationsverbindung zwischen einem Client (2(n)) und einer Drittcomputeranordnung (2(n'); 6), umfassend in dem Client:
a) Einrichten einer einleitenden, sicheren und verschlüsselten Kommunikationsverbindung mit einem Sicherheitsserver (4) über ein öffentliches Kommunikationsnetzwerk, das den Client (2(n)) und den Sicherheitsserver (4) verbindet, wobei eine Client-Applikationssoftware verwendet wird, die auf dem Client (2(n)) installiert ist;
b) nach der Authentifizierung mit einem vorbestimmten Sicherheitsgrad, bei der einleitenden, sicheren und verschlüsselten Kommunikationsverbindung Empfangen eines digitalen Zertifikates, das einen öffentlichen Schlüssel (PuK(i)) und wenigstens ein Attribut enthält, und Empfangen eines privaten Schlüssels (PrK(i)), der mit dem öffentlichen Schlüssel (PuK(i)) assoziiert ist;
c) automatisches Installieren des digitalen Zertifikates und des privaten Schlüssels bei der einleitenden, sicheren und verschlüsselten Kommunikationsverbindung und
d) Ausführen einer sicheren Datenübermittlung bei einer Kommunikationsverbindung zwischen dem Client (2(n)) und einer Drittcomputeranordnung (2(n'); 6), wobei der öffentliche Schlüssel (PuK(i)) und der private Schlüssel (PrK(i)) verwendet werden; und
e) Identifizieren, dass das digitale Zertifikat eine begrenzte Gültigkeit hat, die durch wenigstens ein Attribut definiert ist, und Entfernen des digitalen Zertifikats bei Ablauf der Gültigkeit, wobei das wenigstens eine Attribut wenigstens einen der folgenden Parameter definiert:
- eine vorbestimmte Zeitdauer;
- eine Vorbestimmte Anzahl von Kommunikationsverbindungen und
- eine vorbestimmte Anzahl von Tätigkeiten.

17. Sicherheitsserver nach Anspruch 4, bei dem die einleitende, sichere und verschlüsselte Kommunikationsverbindung ein Diffie-Hellman-Protokoll verwendet.

18. Client (2(n)) nach Anspruch 15, bei dem die einleitende, sichere und verschlüsselte Kommunikationsverbindung ein Diffie-Hellman-Protokoll verwendet.

19. Verfahren nach Anspruch 16 bei dem die einleitende, sichere und verschlüsselte Kommunikationsverbindung ein Diffie-Hellman-Protokoll verwendet.

## Revendications

1. Procédé de transmission sécurisée de données dans une session de communication entre un client (2(n)) et un agencement informatique tiers (2(n') ; 6), comprenant :
a) l'établissement d'une session de communication initiale sécurisée, chiffrée entre ledit client (2(n)) et un serveur de sécurité (4) via un réseau de communication public qui relie ledit client (2(n)) et ledit serveur de sécurité (4) tout en utilisant un logiciel d'application client installé sur le client (2(n)) ;
b) dans ladite session de communication initiale sécurisée, chiffrée, l'authentification d'un utilisateur dudit client (2(n)) dans un processus d'authentification contrôlé par ledit serveur de sécurité (4) tout en utilisant un protocole d'authentification avec un niveau de sécurité prédéterminé ;
c) dans ladite session de communication initiale sécurisée, chiffrée, la transmission audit client (2(n)) d'une clé privée (PrK(i)) et d'un certificat numérique comprenant une clé publique (PuK(i)) et un ou plusieurs attributs, ladite clé privée (PrK(i)) étant associée à ladite clé publique (PuK(i)), ledit certificat numérique et ladite clé privée étant associés audit client (2(n)) ;
d) dans ladite session de communication initiale sécurisée, chiffrée, l'installation automatique desdits certificat numérique et clé privée sur ledit client (2(n)) ;
e) la conduite de ladite transmission sécurisée de données dans ladite session de communication entre ledit client (2(n)) et ledit agencement informatique tiers (2(n') ; 6) tout en utilisant ladite clé publique (PuK(i)) et ladite clé privée (PrK(i)) ;
où ledit certificat numérique a une durée de vie limitée définie par au moins un attribut, ledit au moins un attribut définissant au moins l'un de :
- une durée prédéterminée ;
- un nombre prédéterminé de sessions de communication ;
- un nombre prédéterminé d'actions.

2. Procédé selon la revendication 1, dans lequel ladite session de communication initiale sécurisée, chiffrée utilise un protocole Diffie-Hellman.

3. Procédé selon la revendication 1 ou 2, dans lequel ledit certificat numérique et ladite clé privée sont transmis dudit serveur de sécurité (4) vers ledit client (2(n)) dans un paquet PCKS #12.

4. Procédé selon l'une quelconque des revendications 1, 2 ou 3, dans lequel ledit certificat numérique comprenant ladite clé publique (PuK(i)) et un ou plusieurs attributs, et ladite clé privée (PrK(i)) associée à ladite clé publique (PuK(i)), après avoir été rendus disponibles, sont envoyés audit client (2(n)) et sont stockés par ledit client (2(n)).

5. Procédé selon l'une quelconque des revendications 1, 2 ou 3, dans lequel ledit certificat numérique comprenant ladite clé publique (PuK(i)) et un ou plusieurs attributs, et ladite clé privée (PrK(i)) associée à ladite clé publique (PuK(i)), après avoir été rendus disponibles, sont stockés par ledit serveur de sécurité (4).

6. Procédé selon l'une quelconque des revendications précédentes, dans lequel ladite action d'authentification est basée sur au moins l'un de :
- l'utilisation d'un mot de passe,
- l'utilisation d'un mot de passe à usage unique,
- l'utilisation d'un protocole de défi-réponse,
- l'utilisation d'un jeton matériel,
- l'utilisation d'une carte à puce, et
- l'utilisation d'une fonctionnalité biométrique.

7. Procédé selon l'une quelconque des revendications précédentes, dans lequel ladite transmission sécurisée de données est basée sur au moins l'un parmi le chiffrement desdites données avec une clé publique (PuK(i)) et la signature numérique desdites données avec ladite clé privée (PrK(i)).

8. Procédé selon l'une quelconque des revendications précédentes, dans lequel
- si ledit au moins un attribut définit une durée prédéterminée, ladite durée est une durée de vie de moins de 24 heures, de préférence de moins de 1 heure,
- si ledit au moins un attribut définit un nombre prédéterminé de sessions de communication, ledit nombre de sessions de communication est un,
- si ledit au moins un attribut définit un nombre prédéterminé d'actions, ledit nombre d'actions est un.

9. Procédé selon la revendication 8, dans lequel ladite action est définie comme étant une période active d'un navigateur Web exécuté sur ledit client (2(n)).

10. Procédé selon l'une quelconque des revendications précédentes, dans lequel ladite action d'authentification est effectuée par au moins l'un des services suivants :
un service d'authentification interne audit serveur de sécurité (4) et
un service d'authentification (8) externe audit serveur de sécurité (4).

11. Procédé selon l'une quelconque des revendications précédentes, dans lequel ladite clé publique (PuK(i)) et ladite clé privée (PrK(i)) sont des copies de clés d'un ensemble de clés stockées de façon centralisée qui reste stocké après que ladite clé publique (PuK(i)) et ladite clé privée (PrK(i)) sont rendues disponibles et où lesdites copies desdites clés sont rendues disponibles une ou plusieurs fois.

12. Système comprenant un client (2(n)), un serveur de sécurité (4) et un agencement informatique tiers (2(n') ; 6) dans lequel :
a) ledit client (2(n)) et ledit serveur de sécurité (4) sont agencés pour établir entre eux une session de communication initiale sécurisée et chiffrée, via un réseau de communication public qui relie ledit client (2(n)) et ledit serveur de sécurité (4), tout en utilisant un logiciel d'application client installé sur le client (2(n)) ;
b) ledit serveur de sécurité (4) est configuré pour contrôler dans ladite session de communication initiale sécurisée, chiffrée, l'authentification d'un utilisateur dudit client (2(n)), tout en utilisant un protocole d'authentification avec un niveau de sécurité prédéterminé ;
c) ledit serveur de sécurité (4) est configuré pour transmettre, dans ladite session de communication initiale sécurisée, chiffrée, audit client (2(n)) une clé privée (PrK(i)) et un certificat numérique comprenant une clé publique (PuK(i)) et un ou plusieurs attributs, ladite clé privée (PrK(i)) étant associée à ladite clé publique (PuK(i)), ledit certificat numérique et ladite clé privée étant associés audit client (2(n)) ;
d) ledit client (2(n)) étant configuré pour installer automatiquement dans ladite session de communication initiale sécurisée, chiffrée, lesdits certificat numérique et clé privée ;
e) ledit client (2(n)) et ledit agencement informatique tiers (2(n') ; 6) sont configurés pour effectuer une transmission sécurisée de données dans une session de communication entre ceux-ci tout en utilisant ladite clé publique (PuK(i)) et ladite clé privée (PrK(i)) ;
où ledit système comprend un processeur pour identifier que ledit certificat numérique a une durée de vie limitée définie par au moins un attribut et supprimer ledit certificat numérique après expiration de ladite durée de vie, ledit au moins un attribut définissant au moins l'un de :
- une durée prédéterminée ;
- un nombre prédéterminé de sessions de communication ;
- un nombre prédéterminé d'actions.

13. Système selon la revendication 12, dans lequel le système est configuré pour exécuter l'un quelconque des procédés selon les revendications 2 à 11.

14. Serveur de sécurité comprenant un processeur et une mémoire, la mémoire stockant des données et des instructions pour permettre audit processeur d'exécuter un programme informatique prédéterminé, ledit programme permettant audit serveur de sécurité de :
a) établir une session de communication initiale sécurisée, chiffrée avec un client (2(n)) via un réseau de communication public qui relie ledit client (2(n)) et ledit serveur de sécurité (4) tout en utilisant un logiciel d'application client installé sur le client (2(n)) ;
b) dans ladite session de communication initiale sécurisée, chiffrée, authentifier un utilisateur dudit client (2(n)) tout en utilisant un protocole d'authentification contrôlé avec un niveau de sécurité prédéterminé ;
c) dans ladite session de communication initiale sécurisée, chiffrée, transmettre audit client (2(n)) une clé privée (PrK(i)) et un certificat numérique comprenant une clé publique (PuK(i)) et un ou plusieurs attributs, ladite clé privée (PrK(i)) étant associée à ladite clé publique (PuK(i)), ledit certificat numérique et ladite clé privée étant associés audit client (2(n)) ;
où ledit certificat numérique a une durée de vie limitée définie par au moins un attribut, ledit au moins un attribut définissant au moins l'un de :
- une durée prédéterminée ;
- un nombre prédéterminé de sessions de communication ;
- un nombre prédéterminé d'actions.

15. Client (2(n)) comprenant un processeur et une mémoire, la mémoire stockant des données et des instructions pour permettre audit processeur d'exécuter un programme informatique prédéterminé, ledit programme permettant audit client (2(n)) de :
a) établir une session de communication initiale sécurisée, chiffrée avec un serveur de sécurité (4) via un réseau de communication public qui relie ledit client (2(n)) et ledit serveur de sécurité (4) tout en utilisant un logiciel d'application client installé sur le client (2(n)) ;
b) après avoir été authentifié avec un niveau de sécurité prédéterminé, recevoir, dans ladite session de communication initiale sécurisée, chiffrée, un certificat numérique comprenant une clé publique (PuK(i)) et un ou plusieurs attributs, et recevoir une clé privée (PrK(i)) associée à ladite clé publique (PuK(i)) ;
c) installer automatiquement dans ladite session de communication initiale sécurisée, chiffrée, lesdits certificat numérique et clé privée ;
d) exécuter une transmission sécurisée de données dans une session de communication entre ledit client (2(n)) et un agencement informatique tiers (2(n') ; 6) tout en utilisant ladite clé publique (PuK(i)) et ladite clé privée (PrK(i)) ;
où ledit client 2(n)) comprend un processeur pour identifier que ledit certificat numérique a une durée de vie limitée définie par au moins un attribut et supprimer ledit certificat numérique après expiration de ladite durée de vie, ledit au moins un attribut définissant au moins l'un de :
- une durée prédéterminée ;
- un nombre prédéterminé de sessions de communication ;
- un nombre prédéterminé d'actions.

16. Procédé d'exécution d'une transmission sécurisée de données dans une session de communication entre un client (2(n)) et un agencement informatique tiers (2(n')) ; 6), comprenant dans ledit client (2(n)) ;
a) l'établissement d'une session de communication initiale sécurisée, chiffrée avec un serveur de sécurité (4) via un réseau de communication public qui relie ledit client (2(n)) et ledit serveur de sécurité (4) tout en utilisant un logiciel d'application client installé sur le client (2(n)) ;
b) après avoir été authentifié avec un niveau de sécurité prédéterminé, la réception, dans ladite session de communication initiale sécurisée, chiffrée, d'un certificat numérique comprenant une clé publique (PuK(i)) et un ou plusieurs attributs, et la réception d'une clé privée (PrK(i)) associée à ladite clé publique (PuK(i)) ;
c) l'installation automatique dans ladite session de communication initiale sécurisée, chiffrée, desdits certificat numérique et clé privée ;
d) l'exécution d'une transmission sécurisée de données dans une session de communication entre ledit client (2(n)) et un agencement informatique tiers (2(n') ; 6) tout en utilisant ladite clé publique (PuK(i)) et ladite clé privée (PrK(i)) ;
e) l'identification que ledit certificat numérique a une durée de vie limitée définie par au moins un attribut et la suppression dudit certificat numérique après expiration de ladite durée de vie, ledit au moins un attribut définissant au moins l'un de:
- une durée prédéterminée ;
- un nombre prédéterminé de sessions de communication ;
- un nombre prédéterminé d'actions.

17. Serveur de sécurité tel que défini dans la revendication 14, dans lequel ladite session de communication initiale sécurisée, chiffrée utilise le protocole Diffie-Hellman.

18. Client (2(n)) tel que défini dans la revendication 15, dans lequel ladite session de communication initiale sécurisée, chiffrée utilise le protocole Diffie-Hellman.

19. Procédé tel que défini dans la revendication 16, dans lequel ladite session de communication initiale sécurisée, chiffrée utilise le protocole Diffie-Hellman.
